# EUROPÄISCHE PATENTSCHRIFT

(11) **EP 2 147 956 B1**
(45) Veröffentlichungstag und Bekanntmachung des Hinweises auf die Patenterteilung: **07.09.2011**
(21) Anmeldenummer: 09162280.3
(22) Anmeldetag: 09.06.2009
(51) Int. Cl.: C09D 7/00, C09D 161/00, C09D 161/04, C09D 161/06, C09D 161/24, C09D 161/26, C09D 161/28, C09D 163/00, C08K 5/00, C08K 5/54, C08K 5/541, C08K 5/5415, C08K 5/5419, C09D 7/12

(54) **Verfahren zur Herstellung von Lackoberflächen mit einer verringerten Neigung zur Verschmutzung auf Gegenständen, wie Holzwerkstoffplatten**
Method of manufacturing paint surfaces with a reduced tendency to get dirty on such objects as derived timber boards.
Procédé de fabrication de surfaces de laque moins enclines aux salissures sur des objets, comme des plaques de matière dérivée du bois

(30) Priorität: 23.07.2008 DE 102008034825
(43) Veröffentlichungstag der Anmeldung: 27.01.2010
(73) Patentinhaber: Flooring Technologies Ltd., Pieta PTA 9044 (MT)
(72) Erfinder:
(74) Vertreter: Morawski, Birgit

(56) Entgegenhaltungen:
- EP-A2- 0 627 472
- EP-A2- 1 118 632
- WO-A1-03/037822
- US-B1- 7 294 731

## Beschreibung

Die Erfindung betrifft ein Verfahren zur Herstellung von Lackoberflächen auf Gegenständen, wie Holzwerkstoffplatten mit einer verringerten Neigung zur Verschmutzung.

Es ist bekannt, Holzwerkstoffplatten, wie Span-, Sperrholz-, OSB-, HDF- oder MDF-Platten mit einer Dekorschicht zu versehen. Zur Verbesserung der Verschleißfestigkeit wird auf die Dekorschicht eine Lackschicht aufgetragen und in üblicher Weise ausgehärtet.

Diese Holzwerkstoffplatten werden zu Fußböden, Wandpaneelen, Arbeitsflächen, Möbelplatten u. ä. weiterverarbeitet. Zur Verbesserung der Verschleißfestigkeit können auf die Lackschicht vor deren Aushärtung harte Nanopartikel, z. B. Siliziumdioxid eingestreut werden. Durch solche Zusätze wird die Verschleißfestigkeit erhöht. Trotzdem treten bei der Nutzung Abnutzungs- aber auch Verschmutzungsprobleme auf. Damit einhergehend wird der Glanzgrad, insbesondere von bedruckten Produkten mit einem hohen Glanzgrad von 70 bis > 90 Glanzpunkten vermindert.

Als Prüfmethode wird für die Glanzgradmessung die EN ISO 2813 (Messgeometrie 60°) eingesetzt.

Produkte, die derartige Mängel zeigen, hinterlassen beim Verbraucher einen negativen Eindruck. Zusätzlich tritt insbesondere bei Lackoberflächen leicht eine Unansehnlichkeit durch Fingerabdrücke auf. Dieses Problem, das durch den Handschweiß hervorgerufen wird, kann ebenfalls das Erscheinungsbild einer glatten Hochglanzfläche nachhaltig stören.

Aus der Technik ist bekannt, beispielsweise bei der Autoindustrie, aber auch bei verlegten Fußböden aus Holzwerkstoffplatten die Lackoberflächen nachträglich zu behandeln, um den gewünschten Glanzeffekt zu erhalten oder aber wieder herzustellen. Dabei werden die Gegenstände gereinigt und dann mit Versiegelungsmitteln versehen, die den ursprünglichen Glanz mehr oder weniger wieder herstellen. Die schützende Wirkung beruht auf Füllung der Poren mit dem Versiegelungsmittel. Der Abnutzungswiderstand wird vom Fußbodenmaterial selbst und nicht vom Versiegelungsmittel geleistet. Die Versiegelungsmittel sollen einen Schutz vor Feuchtigkeit und Verschleiß geben und einen Oberflächenglanz erzeugen. Sie vermindern die Schmutzaufnahme und verbessern in der Regel die Rutschfestigkeit der Böden. Bei Selbstglanzemulsionen handelt es sich um flüssige Produkte, die nach dem Auftragen ohne Polieren glänzen. Hauptbestandteile dieser Versiegelungs- bzw. Pflegemittel sind polymere Filmbildner, z. B. Acrylate sowie Wachse. Neuere Entwicklungen gehen in Richtung von Mehrzweckpolituren, d. h. zu Mitteln, mit denen sowohl Fußböden als auch Möbel, Glas, Metall und Keramik gepflegt werden können. Nachteilig bei diesen Versiegelungsmitteln ist, dass sie oft halogenhaltige, insbesondere fluorhaltige Substanzen, die nicht unproblematisch bei der Anwendung sind, enthalten.

Der Erfindung liegt die Aufgabe zugrunde, für Lackoberflächen Ausrüstungen zu finden, die die Neigung zur Verschmutzung verringern und gleichzeitig einen Anti-Finger-Print-Effekt erreichen lassen. Die Ausrüstung soll dabei nicht nachträglich auf die Lackoberflächen aufgetragen werden und frei von halogenhaltigen, insbesondere fluorhaltigen Substanzen sein.

Erfindungsgemäß wird die Aufgabe durch die kennzeichnenden Merkmale der Hauptansprüche gelöst.

Erfindungsgemäß werden den Decklacken, d.h. der obersten Lackschicht von lackierten Produkten Silane zugegeben. Als Trägermaterial für derartige Produkte werden z.B. Holzwerkstoffplatten, wie Span-, Sperrholz-, OSB-, MDF- oder HDF-Platten eingesetzt.

Besonders gute Ergebnisse werden mit Silanen erreicht, die acht Kohlenstoffatome in der Seitenkette aufweisen. Die Menge an zugesetzten Silanen beträgt 0,01 bis 1 Gew.% und insbesondere 0,05 bis 0,2 Gew.%, bezogen auf die Menge an Decklack. Die Silane werden den Decklacken vor deren Auftragen auf die Oberflächen hinzugefügt und sind damit gut über die gesamte Oberfläche des zu schützenden Gegenstandes verteilt.

Als geeigneter Decklack hat sich ein UV- und Elektronenstrahl härtbarer Lack und/oder ein thermisch härtbares Kunstharz, insbesondere ein Melaminharz, ein Harnstoffharz, ein Phenolharz, ein Epoxidharz oder Gemisch von mindestens zwei dieser Harze erwiesen. Zusätzlich können den genannten Harzen Acrylate mit bis zu 5 Gew.--% zugefügt werden.

Besonders bevorzugt ist dabei die Verwendung von Uvacure 1290 der Firma Cytec als Decklack.

Zur Prüfung der Wirksamkeit der erfindungsgemäßen Zusätze an Silanen zu den Decklacken auf z. B. Holzwerkstoff-platten wurde die Ausbildung des sich ausbildenden Randwinkels bei einem aufgetragenen Wassertropfen auf die Lackoberfläche bestimmt. Bei einer Lackoberfläche ohne die erfindungsgemäßen Zusätze wurde ein Randwinkel von etwa 50 ° gemessen. Bei Lackoberflächen, die mit Decklacken mit den erfindungsgemäßen Silanzusätzen erhalten wurden, lag der Randwinkel bei > 80 °. Durch den erfindungsgemäßen Silanzusatz wurde eine deutlich schlechtere Benetzbarkeit erreicht.

Daneben wurden Versuche zur Entfernung von Verschmutzungen von Oberflächen von Gegenständen vorgenommen, die zum einen mit Decklacken ohne und zum anderen mit einem erfindungsgemäßen Zusatz von Silanen erhalten wurden. Dazu wurden die Oberflächen der Gegenstände mit Prüfsubstanzen wie Kugelschreiberpastentinte bzw. mit einem Filzstift verunreinigt. Nach einer Einwirkzeit von 10 Minuten wurden die Oberflächen mit Wasser, dem 1 Gew.% Spülmittel zugegeben wurde, gereinigt. Die Oberflächen mit Decklacken ohne Silanzusatz waren in beiden Fällen nicht rückstandsfrei zu reinigen. Demgegenüber waren die Oberflächen, die aus einem Decklack mit Silanzusatz erhalten wurden, jeweils ohne Probleme rückstandsfrei zu reinigen.

Wenn bei den vorgenannten Ausführungen insbesondere auf Holzwerkstoffplatten Bezug genommen wurde, so ist der erfindungsgemäße Zusatz an Silanen nicht auf die dabei eingesetzten Decklacke beschränkt. Die Silane können auch Decklacken für Metall-, Kunststoff-, Glas-, bzw. Keramikoberflächen zugesetzt werden.

Mit Silanen modifizierte Decklacke sind ebenfalls für die Herstellung von Lackoberflächen auf Holzgegenständen, insbesondere Parkett für Fußbodenbeläge, und einer Dekorpapierlage, insbesondere zur Verwendung in einem Folienpaket geeignet zum Aufkaschieren bzw. Aufkleben auf eine Trägerplatte z.B. in Form einer Spanplatte, einsetzbar. Die so erhaltenen Lackoberflächen weisen ebenfalls einen hohen Glanzgrad von 50 bis 70 Glanzpunkten auf.

Die Erfindung soll anhand eines Beispieles näher erläutert werden.

Zur Antihaftausrüstung in Verbindung mit erhöhter Kratzfestigkeit werden zur Herstellung der erfindungs-gemäßen Modifikation eines Decklackes mit oxidischen nanoskaligen Partikeln z. B. einem Zirconiumdioxid/Sili-ziumdioxid-Gemisches dieses mit Methacryloxypropyl-trimethoxysilan und Octyltriethoxysilan in einem Monomer nämlich Trimethylpropantriacrylat (TMPTA) behandelt.

Dazu wird eine 20 Gew.% nanoskaliger Zirconiumdioxid/Siliziumdioxid-Partikel enthaltende Suspension (im Massenverhältnis 1,37 : 1) in Trimethylpropantriacrylat unter Verwendung eines Dispergierrührers hergestellt. Die Dispersion wird ca. 15 Minuten gerührt und anschließend zu dieser Dispersion eine Mischung aus 45 Gew.% Methacryloxypropyltrimethoxysilan und 5 Gew.% Octyltriethoxysilan jeweils bezogen auf den Anteil der Nanopartikel zugegeben und ebenfalls für 15 Minuten gerührt. Zur Aktivierung wird anschließend 0,5 molare Salzsäure hinzugegeben. Dabei wurde ein ROR-Wert (molares Verhältnis der hydrolysierbaren Gruppe des Silans und des Wassers) von 0,8 eingestellt. Die fertige Suspension wird anschließend noch einmal für 120 Minuten gerührt, wobei die Temperatur maximal 70 °C beträgt.

Die erhaltene Suspension wird einer fertigen Lackmischung z. B. die unter dem Handelsnamen Uvacure 1290 der Firma Cytec im Handel ist in einem Verhältnis von drei Teilen Lackmischung zu zwei Teilen Suspension zugegeben.

Anstelle des TMPTA können die nanoskaligen Partikel aus einem Zirconiumdioxid/Siliziumdioxid-Gemisch auch in einem käuflichen Decklack beispielsweise der Firma Klumpp dispergiert werden. Nach dem Auftragen der vorgenannten Decklacke mit den erfindungsgemäßen Zusätzen an Silanen und Aushärtung zeigen die Oberflächen beim Auftragen eines Wassertropfens Randwinkel von > 80°.

## Patentansprüche

1. Verfahren zur Herstellung von Lackoberflächen mit geringer Verschmutzungsneigung auf Gegenständen, wobei den Decklacken vor deren Aufbringung auf die Oberflächen und Aushärtung Silane zugegeben werden
**dadurch gekennzeichnet,**
**dass** der Decklack als Silane Methacryloxypropyltrimethoxysilan und Octyltriethoxysilan, oxidische Nanopartikel und das Monomer Trimethylpropantriacrylat (TMPTA) umfasst.

2. Verfahren nach Anspruch 1, **dadurch gekennzeichnet, dass** die Silane in Mengen von 0,01 bis 1 Gew.% und insbesondere 0,05 bis 0,2 Gew.%, bezogen auf die eingesetzten Decklacke, zugegeben werden.

3. Verfahren nach mindestens einem der Ansprüche 1 bis 2, **dadurch gekennzeichnet, dass** als Decklack ein UV- und Elektronenstrahl härtbarer Lack und/oder ein thermisch härtbares Kunstharz, insbesondere ein Melaminharz, ein Harnstoffharz, ein Phenolharz, ein Epoxidharz oder Gemisch von mindestens zwei dieser Harze verwendet wird.

4. Verfahren nach Anspruch 3
**gekennzeichnet durch** den zusätzlichen Einsatz von Acrylaten mit bis zu 5 Gew.--%.

5. Verfahren nach mindestens einem der Ansprüche 1 bis 4, **dadurch gekennzeichnet, dass** der Decklack die Nanopartikel in Mengen von 10 Gew.% bis 25 Gew.% enthält.

6. Verfahren nach Anspruch 5, **dadurch gekennzeichnet, dass** als Nanopartikel ein Gemisch aus Zirconiumdioxid/Siliziumdioxid im Massenverhältnis von 30 Teilen zu 70 Teilen bis zu 70 Teilen zu 30 Teilen, und insbesondere 58 zu 42 Teilen eingesetzt wird.

7. Holzwerkstoffplatten, wie Span-, Sperrholz-, OSB-, HDF- oder MDF-Platten, mit Oberflächen hergestellt mit einem Verfahren gemäß einem der Ansprüche 1 bis 6, **gekennzeichnet durch** Lackoberflächen mit hohem Glanzgrad von 50 bis 70 Glanzpunkten.

8. Metallgegenstände, beispielsweise Autoteile, mit Oberflächen hergestellt mit einem Verfahren gemäß einem der Ansprüche 1 bis 6, **gekennzeichnet durch** Lackoberflächen mit hohem Glanzgrad von 50 bis 70 Glanzpunkten.

9. Keramikgegenstände mit Oberflächen hergestellt mit einem Verfahren gemäß einem der Ansprüche 1 bis 6, **gekennzeichnet durch** Lackoberflächen mit hohem Glanzgrad von 50 bis 70 Glanzpunkten.

10. Gegenstände aus Glas mit Oberflächen hergestellt mit einem Verfahren gemäß einem der Ansprüche 1 bis 6, **gekennzeichnet durch** Lackoberflächen mit hohem Glanzgrad von 50 bis 70 Glanzpunkten.

11. Holzgegenstand, insbesondere Parkett für Fußbodenbeläge, hergestellt mit einem Verfahren gemäß einem der Ansprüche 1 bis 6, **gekennzeichnet durch** Lackoberflächen mit hohem Glanzgrad von 50 bis 70 Glanzpunkten.

12. Dekorpapierlage, insbesondere zur Verwendung in einem Folienpaket, hergestellt mit einem Verfahren gemäß einem der Ansprüche 1 bis 6, **gekennzeichnet durch** Lackoberflächen mit hohem Glanzgrad von 50 bis 70 Glanzpunkten.

## Claims

1. Method for manufacturing lacquer surfaces with a reduced tendency to get dirty on objects, wherein silanes are added to the top coat before applying the same to the surfaces and hardening,
**characterized in that**
the top coat comprises methacryloxypropyltrimethoxysilane and octyltriethoxysilane as silanes, oxidic nanoparticles and the monomer trimethylpropantriacrylat (TMTPA).

2. Method according to claim 1, **characterized in that** the silanes are added in amounts of 0.01 to 1 wt% and in particular 0.05 to 0.2 wt% in respect to the used top coat.

3. Method according to at least one of the claims 1 to 2, **characterized in that** a lacquer, which can be hardened by UV and electron beam radiation and/or a thermally curable resin, in particular a melamine resin, a urea resin, a phenol resin, an epoxide resin or a mixture of at least two of these resins are used as top coat.

4. Method according to claim 3, **characterized by** the additional use of acrylates with up to 5 wt%.

5. Method according at least one of the claims 1 to 4, **characterized in that** the top coat contains the nanoparticles in amounts of 10 wt% to 25 wt%.

6. Method according to claim 5, **characterized in that** a mixture of zirconiumdioxid/siliziumdioxid in a mass ratio of 30 parts to 70 parts to 70 to 30 parts, in particular 58 to 42 parts are used as nanoparticles.

7. Wood material board, as particle boards, ply wood boards, OSB-, HDF- or MDF-boards, with surfaces obtained with a method according to one of the claims 1 to 6 **characterized by** to top coats with a high degree of gloss of 50 to 70 gloss points.

8. Metallic objects, for instance vehicle parts, with surfaces obtained by a method according to one of the claims 1 to 6, **characterized by** top coats with a high degree of gloss of 50 to 70 gloss points.

9. Ceramic objects with surfaces obtained in a method according to one of the claims 1 to 6, **characterized by** top coats with a high degree of gloss of 50 to 70 gloss points.

10. Objects of gloss with surfaces obtained in a method according to one of the claims 1 to 6, **characterized by** top coats with a high degree of gloss of 50 to 70 gloss points.

11. Wooden object, in particular parquet for floor covering, obtained in a method according to one of the claims 1 to 6, **characterized by** top coats with a high degree of gloss of 50 to 70 gloss points.

12. Decorative paper sheet, in particular for the use in a foil package, obtained in a method according to one of the claims 1 to 6, **characterized by** top coats with a high degree of gloss of 50 to 70 gloss points.

## Revendications

1. Procédé de fabrication de surfaces de laques sur les objets, ces surfaces étant moins enclines aux salissures, procédé dans lequel des silanes sont additionnés aux laques de couverture avant leur application sur les surfaces et leur durcissement, **caractérisé en ce que** la laque de couverture comprend le méthacryloxypropyltriméthoxysilane et l'octyltriéthoxysilane à titre de silanes, des nanoparticules oxydiques et le monomère triacrylate de triméthylpropane (TMPTA).

2. Procédé selon la revendication 1, **caractérisé en ce que** les silanes sont ajoutés en des quantités de 0,01 à 1 % en poids et en particulier de 0,05 à 0,2 % en poids, par rapport aux laques de couverture mises en oeuvre.

3. Procédé selon au moins une des revendications 1 à 2, **caractérisé en ce que** l'on utilise comme laque de couverture une laque durcissable aux UV et au rayon électronique et/ou une résine synthétique thermodurcissable, en particulier une résine de mélamine, une résine d'urée, une résine phénolique, une résine époxyde ou un mélange d'au moins deux de ces résines.

4. Procédé selon la revendication 3, **caractérisé par** la mise en oeuvre supplémentaire d'acrylates à un taux allant jusqu'à 5 % en poids.

5. Procédé selon au moins une des revendications 1 à 4, **caractérisé en ce que** la laque de couverture comprend des nanoparticules en des quantités allant de 10 % en poids à 25 % en poids.

6. Procédé selon la revendication 5, **caractérisé en ce que** l'on met en oeuvre à titre de nanoparticules un mélange constitué de dioxyde de zirconium/ dioxyde de silicium en un rapport massique de 30 parties à 70 parties pouvant aller jusqu'à 70 parties à 30 parties, et en particulier 58 à 42 parties.

7. Panneaux en matériaux de bois, comme les panneaux de particules, les panneaux de contreplaqué, les panneaux de particules OSB (à lamelles minces orientées), les panneaux HDF ou MDF, comprenant des surfaces fabriquées par un procédé selon une des revendications 1 à 6, **caractérisés par** des surfaces de laque ayant un degré de brillance élevé de 50 à 70 points de brillance.

8. Objets métalliques, par exemple pièces d'automobiles, comprenant des surfaces fabriquées par un procédé selon une des revendications 1 à 6, **caractérisés par** des surfaces de laque ayant un degré de brillance élevé de 50 à 70 points de brillance.

9. Objets en céramique, comprenant des surfaces fabriquées par un procédé selon une des revendications 1 à 6, **caractérisés par** des surfaces de laque ayant un degré de brillance élevé de 50 à 70 points de brillance.

10. Objets en verre, comprenant des surfaces fabriquées par un procédé selon une des revendications 1 à 6, **caractérisés par** des surfaces de laque ayant un degré de brillance élevé de 50 à 70 points de brillance.

11. Objet en bois, en particulier parquet pour les revêtements de sol, fabriqués par un procédé selon une des revendications 1 à 6, **caractérisés par** des surfaces de laque ayant un degré de brillance élevé de 50 à 70 points de brillance.

12. Couche de papier décor, en particulier pour l'utilisation dans un ensemble de feuilles, fabriquée par un procédé selon une des revendications 1 à 6, **caractérisés par** des surfaces de laque ayant un degré de brillance élevé de 50 à 70 points de brillance.
